# EUROPÄISCHE PATENTSCHRIFT

(11) **EP 3 895 929 B1**
(45) Veröffentlichungstag und Bekanntmachung des Hinweises auf die Patenterteilung: **22.06.2022**
(21) Anmeldenummer: 21172254.1
(22) Anmeldetag: 20.03.2019
(51) Int. Cl.: B60K 35/00

(54) **ANZEIGEVORRICHTUNG FÜR EIN KRAFTFAHRZEUG UND KRAFTFAHRZEUG**
DISPLAY DEVICE FOR A MOTOR VEHICLE AND MOTOR VEHICLE
DISPOSITIF D'AFFICHAGE POUR VÉHICULE AUTOMOBILE ET VÉHICULE AUTOMOBILE

(30) Priorität: 30.04.2018 DE 102018206656
(43) Veröffentlichungstag der Anmeldung: 20.10.2021
(62) Teilanmeldung aus: 19713734.2
(73) Patentinhaber: Audi AG, 85045 Ingolstadt (DE)
(72) Erfinder: Hélot, Jacques, 85051 Ingolstadt (DE); Redeker, Immo, 85051 Ingolstadt (DE); Müller, Ulrich, 85055 Ingolstadt (DE); Mertens, Joris, 85053 Ingolstdt (DE); Hufnagel, Anna, 81667 München (DE)

(56) Entgegenhaltungen:
- WO-A1-2014/008903
- DE-A1-102010 055 144
- US-A1- 2017 212 398

## Beschreibung

Die Erfindung betrifft eine Anzeigevorrichtung für ein Kraftfahrzeug sowie ein Kraftfahrzeug mit einer derartigen Anzeigevorrichtung.

Anzeigevorrichtungen wie beispielsweise Darstellungsbildschirme, Touch-Screens oder Displays gehören heutzutage standardmäßig zu der Ausstattung eines Kraftfahrzeugs. Dabei dient eine Anzeigevorrichtung meist als eine Benutzerschnittstelle zwischen einem Benutzer und dem Kraftfahrzeug. Somit können Betriebsfunktionen oder Fahrerassistenzfunktionen des Kraftfahrzeugs dem Benutzer zur Auswahl bereitgestellt werden. Auch dient eine Anzeigevorrichtung zur Anzeige von fahrzeugrelevanten Funktionen, wie beispielsweise eine Anzeige eines Kombiinstruments oder einer in einem Infotainmentsystem ausgewählten Funktion. Derzeitige Anzeigevorrichtungen sind meist innerhalb eines Armaturenbretts oder innerhalb einer Mittelkonsole des Kraftfahrzeugs integriert. Mit zunehmender Anzahl an zur Auswahl stehenden Betriebs- und Komfortfunktionen für den Benutzer im Kraftfahrzeug wird es erforderlich, einerseits eine einfache Bedienung dieser Funktionen zu ermöglichen und andererseits eine Vielzahl von unterschiedlichen Informationen auf übersichtliche Art und Weise zu präsentieren. Zudem erhöht sich durch eine zunehmende Nutzung eines autonomen Fahrmodus im Kraftfahrzeug der Bedarf an Displayfläche der Anzeigevorrichtung, sodass dadurch ein Verlust eines tatsächlichen Raums und eines durch einen Kraftfahrzeuginsassen subjektiv wahrgenommenen Raums im Innenraum des Kraftfahrzeugs mit einhergeht.

So ist aus der US 2017/212398 A1 ist eine Anzeigevorrichtung bekannt, bei welcher eine Lichtdurchlässigkeit einzelner Anzeigebereiche in einer elektrochomen Schicht in der Anzeige mittels einer elektrischen Spannung variierbar ist.

Aus der DE 10 2010 055 144 A1 ist ebenfalls eine Anzeigevorrichtung bekannt, bei welcher eine Anzeige eine Beschichtung aufweist, deren Lichtdurchlässigkeit von einer Steuereinheit elektrisch verändert werden kann und die Steuereinheit eine Anzeigefläche der Anzeige entsprechend der Verdeckung durch die Beschichtung angepasst.

Aus der WO2014/008903 A1 ist ein Bildschirm bekannt, der hinter der Anzeige eine Schicht mit Dioden aufweist, deren Lichtdurchlässigkeit mittels einer elektrischen Spannung verändert wird, damit ein Kontrast des Bildschirms verändert werden kann.

Aufgabe der vorliegenden Erfindung ist es, eine Anzeigevorrichtung für ein Kraftfahrzeug zu schaffen, welches eine übersichtliche Darstellung von Anzeigeinhalten bietet und ermöglicht, mit möglichst wenig Raumverlust eines Innenraums des Kraftfahrzeugs in diesem angeordnet zu werden.

Diese Aufgabe wird durch die Gegenstände der unabhängigen Patentansprüche gelöst. Vorteilhafte Weiterbildungen der Erfindung sind durch die Unteransprüche, die folgende Beschreibung und die Figuren offenbart.

Die vorliegende Erfindung basiert auf der Erkenntnis, dass ein optischer als auch von einem Benutzer wahrgenommener Raumverlust in einem Kraftfahrzeug durch eine darin angeordnete Anzeigevorrichtung, wie beispielsweise einem Bildschirm oder einem Display, dadurch entsteht, dass die Anzeigevorrichtung im Blickfeld eines Fahrers durch seine Größe eine Sicht des Fahrers auf eine Windschutzscheibe und/oder einen sonstigen Raum des Kraftfahrzeugs teilweise blockiert oder versperrt. Im Sichtfeld des Fahrers ist nämlich eine Umgebung hinter der Anzeigevorrichtung durch diese Anzeigevorrichtung verdeckt. Ist die Anzeigevorrichtung im Sichtfeld des Fahrers vor einer Windschutzscheibe montiert, kann ein Teil des Verkehrsgeschehens, welches sich hinter der Windschutzscheibe abspielt, von dem Fahrer nicht mehr wahrgenommen werden. Auch kann die Anzeigevorrichtung bei weiteren Anordnungsmöglichkeiten im Bereich des Armaturenbretts den Fahrer von einem Blick auf die Windschutzscheibe ablenken. Des Weiteren kann durch eine besonders großflächige Anzeigevorrichtung subjektiv ein besonders negatives Raumgefühl bei dem Fahrer oder bei einem weiteren Kraftfahrzeuginsassen entstehen, da sich dieser durch die Anzeigevorrichtung in seinem persönlichen Freiraum beeinträchtigt und somit beengt fühlen kann. Ebenfalls wird eine ablenkende Wirkung beispielsweise durch eine Vielzahl an angezeigten Anzeigeobjekten oder durch eine Nutzung einer Gesamtfläche der Anzeigevorrichtung zum Anzeigen der Anzeigeobjekte auf den Fahrer ausgeübt.

Um einer Einschränkung eines Sichtfelds auf die Windschutzscheibe und/oder um einer Einschränkung eines Raumgefühls eines Benutzers des Kraftfahrzeugs entgegenzuwirken, sieht die Erfindung folgende Anzeigevorrichtung für ein Kraftfahrzeug vor: diese umfasst eine Anzeigescheibe zum Anzeigen von wenigstens einem graphischen Anzeigeobjekt und eine Steuereinrichtung. Mit einer Anzeigescheibe ist beispielsweise eine einheitliche, durchgängige Bildschirm- oder Displayoberfläche gemeint. Mit einem graphischen Anzeigeobjekt ist ein Darstellungsbild, welches beispielsweise ein Piktogramm oder ein sogenanntes Icon umfasst, gemeint. Die Anzeigescheibe umfasst eine Vielzahl von vorbestimmten Teilbereichen, welche jeweils einen einstellbaren Grad einer Lichtdurchlässigkeit aufweisen. Beispielsweise ist die Anzeigescheibe in die Vielzahl von vorbestimmten Teilbereichen unterteilt. Die vorbestimmten Teilbereiche können beispielsweise als quadratische und/oder rechteckige und/oder dreieckförmige und/oder sechseckförmige Flächen ausgebildet sein. Weiterhin können die verschiedenen vorbestimmten Teilbereiche dieselbe Form aufweisen. Die verschiedenen vorbestimmten Teilbereiche können aber auch voneinander unterschiedliche Formen aufweisen. Beispielsweise ergeben die verschiedenen vorbestimmten Teilbereiche zusammen ein flächendeckendes Gesamtmuster. Die vorbestimmten Teilbereiche können zusammen eine Gesamtfläche der Anzeigescheibe bilden. Beispielsweise bildet die Vielzahl der vorbestimmten Teilbereiche lückenlos die Gesamtfläche der Anzeigescheibe. Die Anzeigescheibe kann beispielsweise als ein sogenannter transparenter organischer Leuchtdioden-Bildschirm (T-OLED) oder als ein sogenannter "polymer dispersed liquid crystal" - Bildschirm (PDLC) oder als ein Dünnschichttransistor-Bildschirm (TFT) ausgebildet sein.

Die Anzeigescheibe steht frei in einem Raum. Mit anderen Worten stehen zumindest eine Vorderseite und eine Rückseite der Anzeigescheibe freiliegend in einem Raum. Je nach Grad der Lichtdurchlässigkeit des zumindest einen der Vielzahl von vorbestimmten Teilbereichen ist eine Umgebung der Anzeigescheibe in der Anzeigescheibe selbst sichtbar. Mit anderen Worten kann Licht aus der Umgebung der Anzeigescheibe durch zumindest einen Teilbereich dieser Anzeigescheibe durchdringen. Beispielsweise ist dies der Fall, wenn der zumindest eine Teilbereich auf einen transparenten Grad der Lichtdurchlässigkeit eingestellt ist. Die Steuereinrichtung ist dazu eingerichtet, für jeden der Vielzahl von vorbestimmten Teilbereichen der Anzeigescheibe eine jeweilige Lichtdurchlässigkeit auf einen vorbestimmten Grad individuell einzustellen. Mit anderen Worten ist die Steuereinrichtung dazu eingerichtet, den Grad der Lichtdurchlässigkeit eines jeweiligen Teilbereichs unabhängig von den anderen Teilbereichen der Anzeigescheibe einzustellen.

Der Grad der Lichtdurchlässigkeit des jeweiligen vorbestimmten Teilbereichs der Anzeigescheibe kann durch die Steuereinrichtung derart eingestellt werden, dass der jeweilige vorbestimmte Teilbereich zwischen einem transparenten Zustand, bei welchem der Grad der Lichtdurchlässigkeit beispielsweise wenigstens 40% und/oder wenigstens 50% und/oder wenigstens 60% beträgt, und einem opaken Zustand, bei welchem der Grad der Lichtdurchlässigkeit weniger als 30% und/oder weniger als 20% und/oder weniger als 10% beträgt, eingestellt werden kann. In dem transparenten Zustand kann somit durch die Anzeigescheibe in dem im transparenten Zustand eingestellten vorbestimmten Teilbereich ein Raum und/oder eine Umgebung im Blickfeld eines Benutzers hinter der Anzeigescheibe sichtbar sein.

Die erfindungsgemäße Anzeigevorrichtung bietet den Vorteil, dass je nach Bedarf die Anzeigescheibe der Anzeigevorrichtung zu bestimmten Teilen oder sogar komplett transparent erscheinen kann. Ein Benutzer kann somit durch die Anzeigescheibe hindurch eine Umgebung der Anzeigescheibe betrachten. Ist die Anzeigescheibe überwiegend in einem transparenten Zustand eingestellt, kann die Anzeigescheibe im Sichtfeld eines Benutzers teilweise oder sogar vollständig aus optischer Hinsicht verschwinden. Ein Fahrer des Kraftfahrzeugs lässt sich somit beispielsweise weniger von der Anzeigescheibe ablenken, als wenn diese in einem vollständig opaken Zustand erscheinen würde. Somit ergibt sich der Vorteil, dass der Benutzer einen größeren Raum im Innenraum des Kraftfahrzeugs wahrnimmt und sich möglichst wenig von der Anzeigescheibe ablenken lässt.

Die erfindungsgemäße Anzeigevorrichtung bietet weiterhin den Vorteil, Flexibilität bei der Anzeige von Anzeigeobjekten auf der Anzeigescheibe zu bieten, da beispielsweise eine in einem transparenten Zustand geschaltete Gesamtfläche der Anzeigescheibe in ihrer Größe je nach Bedarf variiert. So ist bei Anzeigen von mehreren Anzeigeobjekten auf der Anzeigescheibe ein größerer Anteil der vorbestimmten Teilbereiche in dem transparenten Zustand geschaltet, als wenn lediglich nur ein Anzeigeobjekt auf der Anzeigescheibe dargestellt wird.

Bevorzugt ist die Steuereinrichtung dazu eingerichtet, den Grad der Lichtdurchlässigkeit eines jeweiligen vorbestimmten Teilbereichs auf einen von zwei möglichen Graden einzustellen, wobei ein erster möglicher Grad einem transparenten Zustand des vorbestimmten Teilbereichs entspricht und wobei ein zweiter möglicher Grad einem opaken Zustand des vorbestimmten Teilbereichs der Anzeigescheibe entspricht. Die durch die Steuereinrichtung einstellbaren Grade der Lichtdurchlässigkeit sind somit binär.

Eine Ausführungsform sieht vor, dass die Steuereinrichtung dazu eingerichtet ist, zu ermitteln, welche vorbestimmten Teilbereiche der Anzeigescheibe zumindest teilweise das wenigstens eine graphische Anzeigeobjekt anzeigen. Auf der Anzeigescheibe können nämlich je nach Fahrbetriebsmodus und/oder je nach einer ausgewählten Kraftfahrzeugfunktion und/oder je nach einer ausgewählten Infotainmentsystem-Funktion des Kraftfahrzeugs verschiedene Darstellungsinhalte in Form von wenigstens einem graphischen Anzeigeobjekt dargestellt werden. Die Steuereinrichtung kann ermitteln, mit welchen vorbestimmten Teilbereichen der Anzeigescheibe sich die darauf dargestellten graphischen Anzeigeobjekte überdecken. Diese ermittelten vorbestimmten Teilbereiche werden von der Steuereinrichtung derart angesteuert, dass der Grad der Lichtdurchlässigkeit dieser Teilbereiche geringer ist als in denjenigen Teilbereichen, in denen kein graphisches Anzeigeobjekt angezeigt wird. Beispielsweise werden die ermittelten Teilbereiche auf einen Grad der Lichtdurchlässigkeit eingestellt, welcher einem opaken Zustand entspricht. Die restlichen Teilbereiche, welche keine graphischen Anzeigeobjekte darstellen, können durch die Steuereinrichtung auf einen Grad der Lichtdurchlässigkeit eingestellt werden, welcher einem transparenten Zustand entspricht. So ist die Anzeigescheibe insgesamt nur in denjenigen Bereichen lichtundurchlässig, in denen zumindest teilweise das graphische Anzeigeobjekt angezeigt wird. Die ermittelten vorbestimmten Teilbereiche, die auf den geringeren Grad der Lichtdurchlässigkeit eingestellt werden können einzeln oder zusammen einen Flächenbereich auf der Anzeigescheibe bilden, welche das zumindest eine graphische Anzeigeobjekt vollständig bedeckt. Dabei kann der Flächenbereich größer sein als die durch das zumindest eine graphische Anzeigeobjekt eingenommene Darstellungsfläche auf der Anzeigescheibe. Der Flächenbereich kann aber auch dieselbe Größe und/oder Form als die von dem zumindest einen graphischen Anzeigeobjekt eingenommene Darstellungsfläche aufweisen. Durch eine Verringerung des Grads der Lichtdurchlässigkeit derjenigen Teilbereiche der Anzeigescheibe, welche zumindest teilweise das wenigstens eine graphische Anzeigeobjekt anzeigen, ergibt sich der Vorteil, dass das wenigstens eine graphische Anzeigeobjekt für einen Benutzer der Anzeigevorrichtung in der Anzeigescheibe besonders gut erkennbar ist. Dadurch, dass beispielsweise die restlichen Teilbereiche transparent geschaltet sind, bleibt die Umgebung der Anzeigescheibe weiterhin in dieser erkennbar. Eine Übersichtlichkeit im Raum bleibt somit vorhanden.

Bevorzugt ist die Steuereinrichtung dazu eingerichtet, den vorbestimmten Grad der Lichtdurchlässigkeit des zumindest einen ermittelten Teilbereichs dann zu verringern, wenn das wenigstens eine graphische Anzeigeobjekt ein Bedeutsamkeitskriterium erfüllt. Das Bedeutsamkeitskriterium kann beispielsweise beinhalten, dass lediglich in einer aktuellen Fahrsituation relevante und/oder wichtige Anzeigeinhalte, die durch das wenigstens eine Anzeigeobjekt dargestellt werden, hervorgehoben werden sollen. So wird beispielsweise das wenigstens eine Anzeigeobjekt auf der Anzeigescheibe mit einem transparent geschalteten Hintergrund angezeigt. Erfüllt das wenigstens eine Anzeigeobjekt das Bedeutsamkeitskriterium, da es beispielsweise eine dringende Warnung oder Eilmeldung darstellt, werden dann zumindest diejenigen Teilbereiche der Anzeigescheibe, welche das wenigstens eine Anzeigeobjekt zumindest teilweise anzeigen, in den opaken Zustand geschaltet. Somit kann eine Dringlichkeit und/oder Bedeutsamkeit einer durch das wenigstens eine Anzeigeobjekt dargestellten Information hervorgehoben werden.

Eine weitere Ausführungsform sieht vor, dass die Steuereinrichtung dazu eingerichtet ist, zumindest einen vorbestimmten Teilbereich aus der Vielzahl von vorbestimmten Teilbereichen der Anzeigescheibe nach einem vorbestimmten Auswahlkriterium auszuwählen. Die Steuereinrichtung ist ferner dazu eingerichtet, den vorbestimmten Grad der Lichtdurchlässigkeit des zumindest einen ausgewählten Teilbereichs zu reduzieren. Beispielsweise ist die Steuereinrichtung dazu eingerichtet, den zumindest einen ausgewählten Teilbereich in einen opaken Zustand einzustellen. Die nicht-ausgewählten Teilbereiche können weiterhin von der Steuereinrichtung in einen transparenten Zustand eingestellt werden. Die Steuereinrichtung ist weiterhin dazu eingerichtet, eine Darstellungsgröße und/oder einen Darstellungsort des wenigstens einen graphischen Anzeigeobjekts derart festzulegen, dass eine Teilfläche, welche durch das wenigstens eine angezeigte graphische Anzeigeobjekt auf der Anzeigescheibe eingenommenen wird, vollständig durch den zumindest einen ausgewählten vorbestimmten Teilbereich umfasst ist. Mit anderen Worten werden durch die ausgewählten Teilbereiche vorab durch die Steuereinrichtung diejenigen Bereiche der Anzeigescheibe bestimmt, auf welchen das zumindest eine graphische Anzeigeobjekt dargestellt werden kann.

Das Auswahlkriterium kann eine Fahrzeugfunktionsgröße betreffen, wie beispielsweise einen Fahrbetriebsmodus oder eine Funktion eines Infotainmentsystems des Kraftfahrzeugs. Beispielsweise kann in einem manuellen Fahrmodus des Kraftfahrzeugs lediglich eine begrenzte Anzahl an vorbestimmten Teilbereichen der Anzeigescheibe zum Anzeigen von Anzeigeobjekten ausgewählt werden, während in einem autonomen oder zumindest teilautonomen Fahrmodus eine Gesamtheit der Vielzahl von vorbestimmten Teilbereichen der Anzeigescheibe ausgewählt werden können. In dem autonomen oder teilautonomen Fahrmodus kann beispielsweise die gesamte Anzeigescheibe in den opaken Zustand eingestellt werden, um beispielsweise eine Funktion des Infotainmentsystems darzustellen.

Das Auswahlkriterium kann aber auch einer persönlichen Benutzereinstellung entsprechen, welche von einem Benutzer eingestellt werden kann. Beispielsweise kann entsprechend einem Benutzerprofil oder einer Bedienauswahl eines Benutzers lediglich eine begrenzte Auswahl an bestimmten Teilbereichen aus der Gesamtheit der Vielzahl von Teilbereichen für eine weitere Auswahl durch die Steuereinrichtung zur Verfügung stehen.

Durch eine Begrenzung der möglichen in einen opaken Zustand einstellbaren Teilbereiche der Anzeigescheibe ergibt sich der Vorteil, dass eine Ablenkung des Benutzers durch das Darstellen der graphischen Anzeigeobjekte möglichst gering gehalten wird. Insbesondere bei einer Fahrt in einem manuellen Betriebsmodus des Kraftfahrzeugs ist es nämlich für den Fahrer bedeutender, ein Verkehrsgeschehen durch eine Windschutzscheibe zu beobachten, als von einem Darstellungsinhalt auf der Anzeigescheibe der Anzeigevorrichtung abgelenkt zu werden. Wird die Anzeigescheibe in dem manuellen Betriebsmodus überwiegend transparent geschaltet, bleibt diese Ablenkung gering. Andererseits bedarf es nicht mehr einer besonderen Aufmerksamkeit des Fahrers auf ein Verkehrsgeschehen in einem autonomen Fahrmodus des Kraftfahrzeugs, sodass die Gesamtfläche der Anzeigescheibe in vorteilhafter Weise genutzt werden kann, um einen Darstellungsinhalt wiederzugeben. Der Fahrer oder ein weiterer Betrachter der Anzeigescheibe kann somit den bestmöglichen Komfort nutzen, der durch die Anzeigevorrichtung bereitgestellt werden kann.

Eine weitere Ausführungsform sieht vor, dass die Anzeigevorrichtung eine Blickerfassungseinrichtung zum Erfassen einer Blickrichtung eines Benutzers auf der Anzeigescheibe aufweist. Beispielsweise weist die Anzeigevorrichtung eine Kamera auf. Die Blickerfassungseinrichtung kann aber auch beispielsweise von einer Spracherkennungseinrichtung im Innenraum des Kraftfahrzeugs das Blickfeld des Benutzers ermitteln. Die Blickerfassungseinrichtung kann unmittelbar an der Anzeigescheibe angeordnet sein oder aber in einer Umgebung der Anzeigescheibe, wie beispielsweise in dem Raum, in der die Anzeigescheibe frei steht oder einer weiteren Position innerhalb des Kraftfahrzeugs angeordnet sein. Die Blickerfassungseinrichtung ist mit anderen Worten dazu eingerichtet, zu erfassen, auf welchen Teilbereich der Anzeigescheibe der Benutzer seinen Blick gerichtet hat.

Die Steuereinrichtung ist dazu eingerichtet, einen Darstellungsort des wenigstens einen graphischen Anzeigeobjekts in Abhängigkeit von der erfassten Blickrichtung auszuwählen. Mit anderen Worten wird der Darstellungsort des wenigstens einen graphischen Anzeigeobjekts derart gewählt, dass dieser im Blickfeld des Benutzers liegt. Ergänzend oder alternativ dazu ist die Steuereinrichtung dazu eingerichtet, den zumindest einen vorbestimmten Teilbereich in Abhängigkeit von der erfassten Blickrichtung auszuwählen. Mit anderen Worten umfasst das vorbestimmte Auswahlkriterium zur Auswahl an vorbestimmten Teilbereichen aus der Vielzahl von vorbestimmten Teilbereichen, dass der auszuwählende vorbestimmte Teilbereich im Blickfeld des Benutzers liegt. Hierdurch ergibt sich der Vorteil, dass eine besonders übersichtliche Darstellung des graphischen Anzeigeobjekts für den Benutzer erfolgt. Dieser muss nicht die gesamte Anzeigescheibe nach dem wenigstens einen graphischen Anzeigeobjekt absuchen, sondern kann auf einem ersten Blick auf die Anzeigescheibe das wenigstens eine graphische Anzeigeobjekt wahrnehmen. Somit kann Zeit eingespart werden, die der Benutzer zum Suchen des graphischen Anzeigeobjekts aufbringen würde, und die er somit stattdessen einem Verkehrsgeschehen widmen kann. Dadurch ergibt sich der Vorteil, dass eine Sicherheit im Straßenverkehr und ein Bedienkomfort für den Benutzer der Anzeigevorrichtung erhöht wird.

Eine weitere Ausführungsform sieht vor, dass die Anzeigescheibe der Anzeigevorrichtung zumindest zwei parallel zueinander angeordnete Schichten aufweist. Die zumindest zwei parallelen Schichten können zusammengesetzt die Anzeigescheibe bilden. Die zumindest eine erste Schicht ist elektrisch leitfähig und dazu ausgelegt, das wenigstens eine graphische Anzeigeobjekt anzuzeigen. Aufgrund der elektrischen Leitfähigkeit der zumindest einen ersten Schicht ist diese dazu ausgelegt, den Grad der Lichtdurchlässigkeit durch ein Anlegen einer elektrischen Spannung in dieser Schicht zu variieren. Dabei kann die elektrische Spannung lediglich in einem einzigen oder in einer Auswahl an vorbestimmten Teilbereichen der Vielzahl von vorbestimmten Teilbereichen angelegt werden, sodass lediglich in den mit einer elektrischen Spannung versehenen Teilbereichen der Grad der Lichtdurchlässigkeit variiert. Die erste Schicht der Anzeigescheibe kann beispielsweise als ein Dünnschichttransistor-Bildschirm oder sogenannter TFT-Bildschirm ausgebildet sein. Der TFT-Bildschirm kann entgegen des im Stand der Technik Üblichen ohne eine Bildschirm-Hintergrundbeleuchtungsvorrichtung ausgebildet sein. Eine elektrische Spannung kann lediglich in denjenigen vorbestimmten Teilbereichen des TFT-Bildschirms angelegt werden, welche zumindest teilweise das wenigstens eine graphische Anzeigeobjekt anzeigen. Hierdurch können diese vorbestimmten Teilbereiche in einen opaken Zustand eingestellt werden.

Die zumindest eine zweite Schicht ist transparent und dazu ausgelegt, zumindest in denjenigen vorbestimmten Teilbereichen der Anzeigescheibe Licht zu emittieren, in welchen das wenigstens eine graphische Anzeigeobjekt in der ersten Schicht zumindest teilweise angezeigt wird. Die zumindest eine zweite Schicht ist beispielsweise als ein transparenter Bildschirm mit einer Vielzahl von monochromen organischen Leuchtdioden (OLED) ausgebildet. Die organischen Leuchtdioden können über eine Gesamtfläche des transparenten Bildschirms verteilt angeordnet sein, sodass von der Steuereinrichtung jeweils diejenigen organischen Leuchtdioden angesteuert werden, welche sich mit dem in der ersten Schicht angezeigten graphischen Anzeigeobjekt überdecken. Somit erscheint einem Betrachter der Anzeigescheibe, welcher die zumindest eine zweite Schicht hinter der zumindest einen ersten Schicht wahrnimmt, insgesamt das wenigstens eine graphische Anzeigeobjekt als ein lichtabstrahlendes Anzeigeobjekt. Mit anderen Worten wird das in der ersten Schicht wenigstens eine angezeigte graphische Anzeigeobjekt durch die wenigstens eine organische Leuchtdiode in der zweiten Schicht beleuchtet. Hierdurch ergibt sich der Vorteil, dass das wenigstens eine Anzeigeobjekt mit einer Leuchtkraft auf der Anzeigescheibe angezeigt wird und somit gut für den Benutzer erkennbar ist. Die restlichen Teilbereiche der Anzeigescheibe können in dem transparenten Zustand bleiben, sodass die restliche Anzeigescheibe das Betrachtungsfeld des Benutzers nicht stört. Ist die erste Schicht beispielsweise als ein TFT-Bildschirm ausgebildet, so bieten die organischen Leuchtdioden in der zweiten Schicht den Vorteil, farbige und schwarze Bereiche in der ersten Schicht anzuleuchten, die der TFT-Bildschirm üblicherweise selbst als nicht-leuchtend ausgibt. Die Schwarzwerte des sich insgesamt ergebenden lichtabstrahlenden Anzeigeobjekts strahlen dabei jedoch weiterhin kein Licht ab.

Eine weitere Ausführungsform sieht alternativ hierzu vor, dass die zumindest eine erste Schicht als eine transparente Schicht ausgebildet und dazu eingerichtet ist, das wenigstens eine graphische Anzeigeobjekt als ein transparentes Leuchtbild anzuzeigen. Beispielsweise ist die zumindest eine erste Schicht als ein transparenter OLED-Bildschirm (T-OLED) ausgebildet. Die zumindest eine zweite Schicht ist elektrisch leitfähig. Der vorbestimmte Grad der Lichtdurchlässigkeit zumindest in denjenigen vorbestimmten Teilbereichen der Anzeigescheibe, in welchen das wenigstens eine transparente Leuchtbild in der ersten Schicht zumindest teilweise angezeigt wird, ist durch ein Anlegen einer elektrischen Spannung in dem jeweiligen vorbestimmten Teilbereich der zweiten Schicht variierbar. Mit anderen Worten ist die zweite Schicht dazu ausgelegt, in Abhängigkeit von einer elektrischen Spannung, welche in dem zumindest einem vorbestimmten Teilbereich angelegt ist, einen Grad der Lichtdurchlässigkeit in diesem zumindest einen vorbestimmten Teilbereich zu variieren. Beispielsweise wechselt der vorbestimmte Teilbereich von einem opaken Zustand in einen transparenten Zustand, wenn die elektrische Spannung in dem vorbestimmten Teilbereich angelegt wird. Alternativ kann der vorbestimmte Teilbereich von einem transparenten Zustand in einen opaken Zustand bei Anlegen der elektrischen Spannung wechseln. Die zumindest eine zweite Schicht ist beispielsweise als eine sogenannte schaltbare Folie ausgebildet. Die schaltbare Folie ist beispielsweise als eine Kunststoff-Folie ausgebildet, welche dazu eingerichtet ist, elektronische Impulse zu leiten. Die schaltbare Folie kann beispielweise eine Flüssigkristall-Folie umfassen, welche beidseitig elektrisch leitend beschichtet ist und zwischen zwei Kunststoff-Folien einlaminiert ist.

Die Anzeigescheibe kann sich somit aus einem T-OLED-Bildschirm, welcher mit der schaltbaren Folie laminiert ist, zusammensetzen. Das in der ersten Schicht angezeigte transparente Leuchtbild wird durch die im Hintergrund in einen opaken Zustand geschaltete zweite Schicht im Sichtfeld des Benutzers insgesamt als ein lichtabstrahlendes graphisches Anzeigeobjekt angezeigt. Hierdurch ergibt sich in dieser Ausführungsform ebenfalls der Vorteil, dass das wenigstens eine Anzeigeobjekt mit einer Leuchtkraft und mit einer Abschirmung einer Umgebung im Hintergrund des Anzeigeobjekts auf der Anzeigescheibe angezeigt wird und somit gut für den Benutzer erkennbar ist. Die restlichen Teilbereiche der zweiten Schicht können in einen transparenten Zustand geschaltet sein, sodass zusammen mit der transparenten ersten Schicht die restliche Anzeigescheibe insgesamt transparent erscheint und somit das Betrachtungsfeld des Benutzers im Weiteren nicht stört.

Eine weitere Ausführungsform sieht vor, dass die Steuereinrichtung bei Einstellen der Lichtdurchlässigkeit zumindest eines vorbestimmten Teilbereichs der Anzeigescheibe auf einen vorbestimmten Grad dazu eingerichtet ist, den Grad der Lichtdurchlässigkeit des zumindest eines vorbestimmten Teilbereichs der Anzeigescheibe von einem anfänglichen Grad zu dem einzustellenden vorbestimmten Grad der Lichtdurchlässigkeit graduell variieren zu lassen. Mit anderen Worten stellt die Steuereinrichtung die Lichtdurchlässigkeit eines vorbestimmten Teilbereichs derart ein, dass sich ein flüssiger oder schrittweiser Übergang zwischen einem Anfangswert der Lichtdurchlässigkeit und einem Endwert der Lichtdurchlässigkeit dieses Teilbereichs ergibt. Beispielsweise wird der vorbestimmte Teilbereich von einem transparenten Zustand in einen opaken Zustand geschaltet. Die Steuereinrichtung kann dann schrittweise den Grad der Lichtdurchlässigkeit innerhalb eines vorbestimmten Zeitraums verringern, bis der opake Zustand erreicht ist.

Ist der zumindest eine vorbestimmte Teilbereich lediglich binär von einem transparenten in einen opaken Zustand oder umgekehrt schaltbar, so kann der graduelle oder flüssige Übergang dadurch erreicht werden, dass eine Vielzahl von benachbarten Teilbereichen des zumindest einen vorbestimmten Teilbereichs nacheinander ebenfalls von einem transparenten in einen opaken Zustand oder umgekehrt geschaltet werden. Durch den graduellen oder flüssigen Übergang wird einem Benutzer der Anzeigevorrichtung vermittelt, dass zwischen zwei unterschiedlichen Betriebsmodi der Anzeigevorrichtung geschaltet wird, sodass der Benutzer nicht von einem Zustandswechsel überrascht wird. Somit erhöht sich der Bedienkomfort der Anzeigevorrichtung.

Das erfindungsgemäße Kraftfahrzeug weist die erfindungsgemäße Anzeigevorrichtung auf. Dabei kann das Kraftfahrzeug auch mehrere der erfindungsgemäßen Anzeigevorrichtungen aufweisen. Zumindest eine Anzeigevorrichtung ist im Bereich eines Armaturenbretts und/oder einer Mittelkonsole und/oder einem Scheibenwurzelbereich des Kraftfahrzeugs angeordnet.

Zumindest eine weitere Anzeigevorrichtung kann in einem Türbereich und/oder einem Fahrzeugsitz-Bereich angeordnet sein. Beispielsweise ist die Anzeigevorrichtung in einem hinteren Bereich einer Nackenstütze eines Fahrzeugsitzes angeordnet.

Eine Ausführungsform des Kraftfahrzeugs sieht vor, dass die Steuereinrichtung der zumindest einen Anzeigevorrichtung dazu eingerichtet ist, einen jeweiligen Grad der Lichtdurchlässigkeit der Vielzahl von vorbestimmten Teilbereichen der Anzeigescheibe der Anzeigevorrichtung in Abhängigkeit von einem Bedienvorgang und/oder von einer Kraftfahrzeugfunktion und/oder von einem Fahrbetriebsmodus des Kraftfahrzeugs einzustellen. Beispielsweise wird in einem manuellen Fahrmodus des Kraftfahrzeugs lediglich ein kleiner Bereich der Anzeigescheibe in einen opaken Zustand geschaltet, während der restliche Bereich der Anzeigescheibe in einen transparenten Zustand geschaltet wird. Das mindestens eine graphische Anzeigeobjekt wird dann lediglich in dem opaken Zustand geschalteten Bereich angezeigt. So kann der restliche Bereich der Anzeigescheibe transparent bleiben und dem Benutzer der Anzeigevorrichtung möglichst viel Raumgefühl geben. Beispielsweise wird in dem in den opaken Zustand geschalteten Bereich ein Kombiinstrument des Kraftfahrzeugs angezeigt. Ein Fahrer des Kraftfahrzeugs muss somit nur diesen Bereich anvisieren, wenn er eine Information des Kombiinstruments ablesen möchte. In vorteilhafter Weise wird er nicht durch den Rest der Anzeigescheibe abgelenkt.

In einem autonomen Fahrmodus des Kraftfahrzeugs kann dann beispielsweise die Gesamtfläche der Anzeigescheibe in den opaken Zustand geschaltet werden, sodass die Gesamtfläche dazu genutzt werden kann, beispielsweise einen Film oder Inhalte einer Internet-Website darzustellen. Die Anzeigescheibe kann zudem als ein Touchscreen ausgebildet sein, sodass der Benutzer einzelne Inhalte der Internet-Webseite auswählen kann, wie beispielsweise zum Einkaufen. Die Anzahl an vorbestimmten Teilbereichen, die in einen opaken Zustand geschaltet sind, kann sich an dem jeweiligen dargestellten Anzeigeinhalt anpassen. Es kann sich aber auch der jeweilige dargestellte Anzeigeinhalt an den bereits in den opaken Zustand geschalteten vorbestimmten Teilbereichen anpassen, wie beispielsweise an ein Seitenverhältnis der insgesamt in den opaken Zustand geschalteten Teilfläche der Anzeigescheibe.

Die Erfindung sieht vor, dass das Kraftfahrzeug in einem Scheibenwurzelbereich der Windschutzscheibe eine wannenförmige Aussparung aufweist. Mit anderen Worten befindet sich im Scheibenwurzelbereich des Kraftfahrzeugs eine Vertiefung. Diese wannenförmige Aussparung weist zumindest eine Seitenwand auf, wobei die wannenförmige Aussparung in Richtung eines Fahrerraums des Kraftfahrzeugs geöffnet ist. Die wannenförmige Aussparung weist beispielsweise drei Seitenwände auf, wobei parallel zu derjenigen Seitenwand, welche sich entlang der Scheibenwurzel erstreckt, die wannenförmige Aussparung in Richtung des Fahrerraums geöffnet ist. Die Anzeigescheibe der Anzeigevorrichtung ist innerhalb der wannenförmigen Aussparung in einem vorbestimmten Abstand zu der zumindest einen Seitenwand angeordnet. Beispielsweise ist die Anzeigescheibe in dem vorbestimmten Abstand zu derjenigen Seitenwand, welche sich entlang der Scheibenwurzel erstreckt, angeordnet. Der vorbestimmte Abstand kann wenigstens 10 cm und/oder wenigstens 20 cm und/oder wenigstens 30 cm betragen. Die Anzeigescheibe kann parallel zu der Seitenwand angeordnet sein. Aus der Perspektive eines Fahrersitzes ist die zumindest eine Seitenwand hinter der Anzeigescheibe angeordnet. Somit wird in einem transparenten Teilbereich der Anzeigescheibe die Seitenwand in der Anzeigescheibe sichtbar. Es kann aber auch nur ein Teilbereich der Anzeigescheibe in der wannenförmigen Aussparung angeordnet sein. Beispielsweise kann die wannenförmige Aussparung in Richtung der Scheibenwurzel auch offen sein. Aus der Perspektive eines Fahrers kann dann durch die Anzeigescheibe auf die Windschutzscheibe eine vor dem Kraftfahrzeug befindliche Umgebung wahrgenommen werden.

Die wannenförmige Aussparung kann eine Verkleidung aus beispielsweise Holz aufweisen. Weiterhin kann die Anzeigescheibe derart in der wannenförmigen Aussparung angeordnet sein, dass ein oberer Rand der Anzeigescheibe nicht über die zumindest eine Seitenwand der wannenförmigen Aussparung hinausragt. Somit wird ein Blick auf die Windschutzscheibe nicht durch die Anzeigescheibe gestört. Aus dem Blickfeld des Fahrersitzes befindet sich die Anzeigescheibe unterhalb der Windschutzscheibe in der tiefer gelegenen wannenförmigen Aussparung. Diese Anordnung der Anzeigescheibe der Anzeigevorrichtung im Kraftfahrzeug ermöglicht es, eine ablenkungsarme Anzeigevorrichtung für einen Fahrer des Kraftfahrzeugs bereitzustellen. Durch den Abstand zwischen der zumindest einen Seitenwand und der Anzeigescheibe entsteht zudem der optische Eindruck eines großen Raums zwischen dem Fahrersitz und der Windschutzscheibe, sodass der Fahrer kein einschränkendes oder beengendes Raumgefühl bekommt.

Eine weitere Ausführungsform sieht hierzu vor, dass die wannenförmige Aussparung in Richtung der Windschutzscheibe geöffnet ist, sodass die Windschutzscheibe in der innerhalb der wannenförmigen Aussparung angeordneten Anzeigescheibe sichtbar ist. Somit kann aus einem Blickwinkel eines Fahrers des Kraftfahrzeugs, der seinen Blick auf die Anzeigescheibe richtet, eine Umgebung des Kraftfahrzeugs durch die Anzeigescheibe und durch die Windschutzscheibe wahrgenommen werden. Hierdurch vergrößert sich das subjektiv wahrgenommene Raumgefühl des Fahrers, da durch die Anzeigescheibe keine Einschränkung auf einen Sichtbereich der Windschutzscheibe erfolgt.

Eine weitere Ausführungsform sieht hierzu vor, dass sich die wannenförmige Aussparung und/oder eine Längsrichtung der Anzeigescheibe zumindest teilweise oder vollständig über eine Gesamtlänge der Scheibenwurzel erstreckt. Somit kann eine gesamte Breite eines Innenraums des Kraftfahrzeugs und/oder der Windschutzscheibe genutzt werden, um verschiedene graphische Anzeigeobjekte auf der Anzeigescheibe darzustellen. Je nach Bedarf können auf der Anzeigescheibe Darstellungsinhalte im Bereich unmittelbar vor einem Fahrersitz und/oder vor einem Beifahrersitz dargestellt werden. Die wannenförmige Aussparung und/oder die Längsrichtung der Anzeigescheibe kann sich weiterhin von der Scheibenwurzel entlang eines Seitenbereichs des Kraftfahrzeugs, wie beispielsweise einem Türbereich des Kraftfahrzeugs, erstrecken. Die Anzeigescheibe kann sich weiterhin fahrzeugumlaufend im Innenbereich des Kraftfahrzeugs erstrecken.

Eine weitere Ausführungsform sieht hierzu vor, dass zwischen der zumindest einen Seitenwand der wannenförmigen Aussparung in der Anzeigescheibe der Anzeigevorrichtung eine Ablage und/oder eine weitere Anzeigescheibe angeordnet ist. So kann der Raum zwischen der zumindest einen Seitenwand und der Anzeigescheibe sinnvoll genutzt werden. Sind in dem Raum zwei Anzeigescheiben hintereinander angeordnet, kann zudem ein dreidimensionales Darstellungsbild erstellt werden, indem unterschiedliche graphische Anzeigeobjekte versetzt zueinander in der ersten und in der zweiten Anzeigescheibe dargestellt werden. Hierdurch kann eine Vielfalt von möglichen Darstellungsoptionen ermöglicht werden.

Eine weitere Ausführungsform sieht vor, dass die Anzeigescheibe in zumindest einer Raumrichtung beweglich gelagert ist. Die Steuereinrichtung der Anzeigevorrichtung ist dazu ausgelegt, in Abhängigkeit von einem Bedienvorgang und/oder von einer Kraftfahrzeugfunktion und/oder von einem Fahrbetriebsmodus des Kraftfahrzeugs eine Bewegung der Anzeigescheibe in der zumindest einen Raumrichtung anzusteuern. Die Anzeigescheibe ist beispielsweise parallel zu einer Längsachse und/oder einer Querachse und/oder einer Vertikalachse des Kraftfahrzeugs beweglich gelagert. Die Anzeigescheibe kann aber auch um eine eigene Achse rotiert werden. Beispielsweise kann die Anzeigescheibe innerhalb der wannenförmigen Aussparung derart durch die Steuereinrichtung bewegt werden, dass der Abstand zwischen der zumindest einen Seitenwand und der Anzeigescheibe variiert. Weiterhin kann die Anzeigescheibe aus der wannenförmigen Aussparung ausgefahren werden, beispielsweise bei einem autonomen Fahrmodus, sodass sich die Anzeigescheibe teilweise mit der Windschutzscheibe überdeckt. Bei einem Übergang in einem manuellen Fahrmodus kann dann die Anzeigescheibe wieder in die wannenförmige Aussparung hineingefahren werden, sodass die Anzeigescheibe den Blick auf die Windschutzscheibe nicht stört. Durch die bewegliche Lagerung der Anzeigescheibe in zumindest einer Raumrichtung ergibt sich eine Vielfalt von möglichen Nutzungsoptionen der Anzeigevorrichtung, aus der je nach Benutzerbedarf ausgewählt werden kann.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Anzeigevorrichtung beschrieben worden sind. Aus diesem Grund sind die entsprechenden Weiterbildungen des erfindungsgemäßen Kraftfahrzeugs hier nicht noch einmal beschrieben. Die Weiterbildungen der erfindungsgemäßen Anzeigevorrichtung gelten sinngemäß für das erfindungsgemäße Kraftfahrzeug.

Im Folgenden sind Ausführungsbeispiele der Erfindung beschrieben. Hierzu zeigen:
- Fig. 1: eine schematische Darstellung einer lediglich teilweise dargestellten Anzeigescheibe mit einem graphischen Anzeigeobjekt und einer Zusammensetzung der Anzeigescheibe in zwei Schichten;
- Fig. 2: eine schematische Darstellung wie in Fig. 1 in einer unterschiedlichen Ausführungsform;
- Fig. 3: eine schematische Darstellung wie in Fig. 1 und in Fig. 2 in einer weiteren unterschiedlichen Ausführungsform;
- Fig. 4: eine Perspektivansicht eines lediglich teilweise schematisch dargestellten Fahrzeuginnenraums eines Kraftfahrzeugs, mit einer in einer wannenförmigen Aussparung angeordneten Anzeigescheibe;
- Fig. 5: eine schematische Darstellung wie in Fig. 4 mit einem auf der Anzeigescheibe dargestellten Kombiinstrument;
- Fig. 6: eine schematische Darstellung wie in Fig. 4 mit einem auf der Anzeigescheibe dargestellten Film;
- Fig. 7: eine schematische Darstellung wie in Fig. 4 mit einer auf der Anzeigescheibe dargestellten Internet-Webseite;
- Fig. 8: eine schematische Darstellung wie in Fig. 4 mit einer weiteren Anzeigescheibe an einem lediglich teilweise dargestellten Fahrzeugsitz des Kraftfahrzeugs;
- Fig. 9: eine Perspektivansicht eines lediglich teilweise schematisch dargestellten Fahrzeuginnenraums eines Kraftfahrzeugs mit einer Anordnung zweier Anzeigescheiben in einem ArmaturenbrettBereich eines Kraftfahrzeugs;
- Fig. 10: eine schematische Darstellung dreier Anzeigescheiben wie in Fig. 4 mit jeweils einer Vielzahl von vorbestimmten Teilbereichen, welche jeweils in einem transparenten oder in einem opaken Zustand geschaltet sind; und
- Fig. 11: eine Perspektivansicht eines schematisch dargestellten Kraftfahrzeugs mit einer in einer wannenförm igen Aussparung angeordneten Anzeigescheibe.

In den Figuren bezeichnen gleiche Bezugszeichen jeweils funktionsgleiche Elemente.

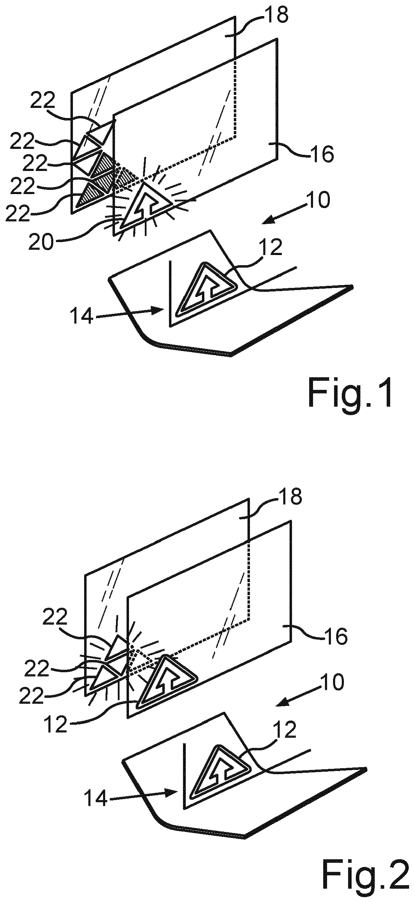

In Fig. 1 ist in einem unteren Bereich lediglich ein Ausschnitt einer Anzeigescheibe 10 schematisch dargestellt, welche auf einem transparenten Hintergrund ein graphisches Anzeigeobjekt 12 anzeigt. Hier ist das graphische Anzeigeobjekt 12 als ein Logo für künstliche Intelligenz in einer Dreiecksform dargestellt. Die Anzeigescheibe 10 ist mit Ausnahme des Bereichs, welcher das graphische Anzeigeobjekt 12 zeigt, transparent, sodass eine Umgebung 14 der Anzeigescheibe 10 in der Anzeigescheibe 10 erkennbar ist. Derjenige Bereich der Anzeigescheibe 10, welcher durch das graphische Anzeigeobjekt 12 eingenommen wird, ist opak. Die Anzeigescheibe 10 ist Teil einer Anzeigevorrichtung, welche einen anzuzeigenden Darstellungsinhalt auf der Anzeigescheibe 10 durch eine Steuereinrichtung steuert.

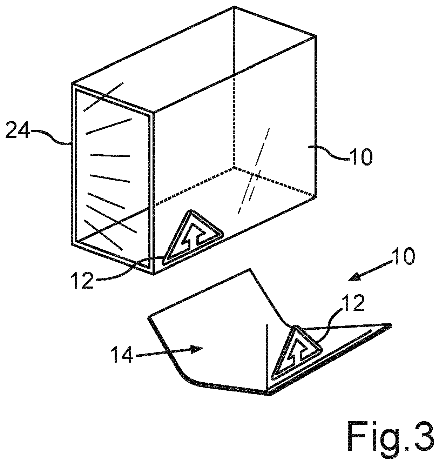

Die Anzeigescheibe 10 ist aus zwei Schichten 16 und 18 zusammengesetzt. Dies ist im oberen Bereich der Fig. 1 (und entsprechend auch in Fig. 2 und Fig. 3) in einer Explosionsdarstellung der zwei Schichten 16 und 18 dargestellt. Die erste Schicht 16 ist als ein transparenter OLED-Bildschirm ausgebildet. Dieser ist dazu ausgebildet, wenigstens ein graphisches Anzeigeobjekt 12 als ein transparentes Leuchtbild 20 anzuzeigen. Mit anderen Worten emittiert der transparente OLED-Bildschirm als graphisches Anzeigeobjekt 12 Licht in zumindest einer vorbestimmten Farbe. Der transparente OLED-Bildschirm ist mit einer zweiten Schicht 18 laminiert, welche als eine schaltbare Folie ausgebildet ist. Die schaltbare Folie ist elektrisch leitfähig und in einer Vielzahl von vorbestimmten Teilbereichen 22 unterteilt. Hier dargestellt hat ein vorbestimmter Teilbereich 22 die Form eines Dreiecks, wobei alle Dreiecke zusammengesetzt die Gesamtfläche der schaltbaren Folie bilden können. Der vorbestimmte Teilbereich 22 kann aber auch die Form eines Quadrats und/oder eines Rechtecks und/oder eines Hexagons und/oder einer beliebigen geometrischen Figur aufweisen.

Die einzelnen vorbestimmten Teilbereiche 22 sind von der Steuereinrichtung der Anzeigevorrichtung schaltbar, sodass eine elektrische Spannung lediglich in einem oder einer Auswahl von der Vielzahl von vorbestimmten Teilbereichen 22 angelegt werden kann. Je nach angelegter Spannung wechselt der vorbestimmte Teilbereich 22 von einem transparenten Zustand in einen opaken Zustand. Dabei weist ein transparenter Zustand eine Transparenz von wenigstens 40 % und/oder wenigstens 50 % und/oder wenigstens 60 % auf. Eine opaker Zustand weist eine Opazität von wenigstens 70 % und/oder wenigstens 80 % und/oder wenigstens 90 % auf. Die vorbestimmten Teilbereiche 22, die von der Steuereinrichtung in einen opaken Zustand geschaltet werden, sind derart gewählt, dass diese sich zumindest teilweise mit dem auf dem transparenten OLED-Bildschirm angezeigten transparenten Leuchtbild überdecken. Hier dargestellt sind vier Dreiecke, welche jeweils einen vorbestimmten Teilbereich 22 bilden, in den opaken Zustand geschaltet, sodass die vier Dreiecke zusammengesetzt eine dreieckförmige Fläche bilden, welche der dreieckförmigen Fläche des transparenten Leuchtbilds auf dem transparenten OLED-Bildschirm entspricht. Somit ist insgesamt auf der Anzeigescheibe 10, die durch den transparenten OLED-Bildschirm und die schaltbare Folie gebildet wird, ein graphisches Anzeigeobjekt 12 zu erkennen, wobei lediglich der Hintergrund des Anzeigeobjekts 12 opak ist. Die restliche Anzeigescheibe 10 ist transparent. Da der OLED-Bildschirm keine Darstellung in schwarzer Farbe ausgeben kann, können diejenigen Teilbereiche des graphischen Anzeigeobjekts 12, welche schwarz angezeigt werden sollten, durch den OLED-Bildschirm als transparente Bereiche ausgegeben werden, welche anschließend durch die im Hintergrund opak geschaltete Folie insgesamt schwarz erscheinen.

In Fig. 2 ist eine alternative Ausführungsform der Anzeigescheibe 10 dargestellt. Diese zeigt im Endergebnis dasselbe graphische Anzeigeobjekt 12 wie in der in Fig. 1 dargestellten Ausführungsform an. Die erste und die zweite Schicht 16 und 18 der Anzeigescheibe 10 sind jedoch unterschiedlich ausgeführt. Die erste Schicht 16 ist als ein TFT-Bildschirm ausgebildet, welcher keine Hintergrundbeleuchtung aufweist. Der TFT-Bildschirm ist dazu eingerichtet, das graphische Anzeigeobjekt 12 opak darzustellen. Die Bereiche des TFT-Bildschirms außerhalb des graphischen Anzeigeobjekts 12 sind transparent. Die zweite Schicht 18 der Anzeigescheibe 10 ist als ein transparenter Bildschirm mit monochromen organischen Leuchtdioden ausgebildet. Die monochromen organischen Leuchtdioden sind über eine Gesamtfläche des transparenten Bildschirms derart angeordnet, dass jeweils ein vorbestimmter Teilbereich 22 des transparenten Bildschirms durch die monochromen organischen Leuchtdioden Licht emittiert. So können hier ebenfalls in der zweiten Schicht dreiecksförmige Teilbereiche 22 gebildet sein, welche jeweils einzeln leuchtend oder nicht-leuchtend geschaltet werden können. In Fig. 2 sind vier dreiecksförmige Teilbereiche 22 als leuchtend dargestellt, welche demjenigen Bereich des TFT-Bildschirms entsprechen, auf welchem das graphische Anzeigeobjekt 12 angezeigt wird. Im Endergebnis wird das graphische Anzeigeobjekt 12 durch die im Hintergrund des graphischen Anzeigeobjekts 12 leuchtenden organischen Leuchtdioden beleuchtet. Somit ist im Endergebnis auf der Anzeigescheibe 10 ein leuchtendes und opakes Anzeigeobjekt 12 sichtbar.

In Fig. 3 ist eine dritte Ausführungsform zur Realisierung einer Darstellung eines graphischen Anzeigeobjekts 12 auf einer transparenten Anzeigescheibe 10 wie in den Figuren 1 und 2 dargestellt. Hierbei ist die Anzeigescheibe 10 als ein TFT-Bildschirm wie in Fig. 2 ausgebildet, dessen Hintergrund durch eine Beleuchtungseinrichtung 24 beleuchtet wird. Die Beleuchtungseinrichtung 24 weist beispielsweise die Form einer Box auf, innerhalb welcher der TFT-Bildschirm aufgenommen ist. Durch die Beleuchtungseinrichtung 24 wird das auf dem TFT-Bildschirm dargestellte graphische Anzeigeobjekt 12 im Hintergrund beleuchtet.

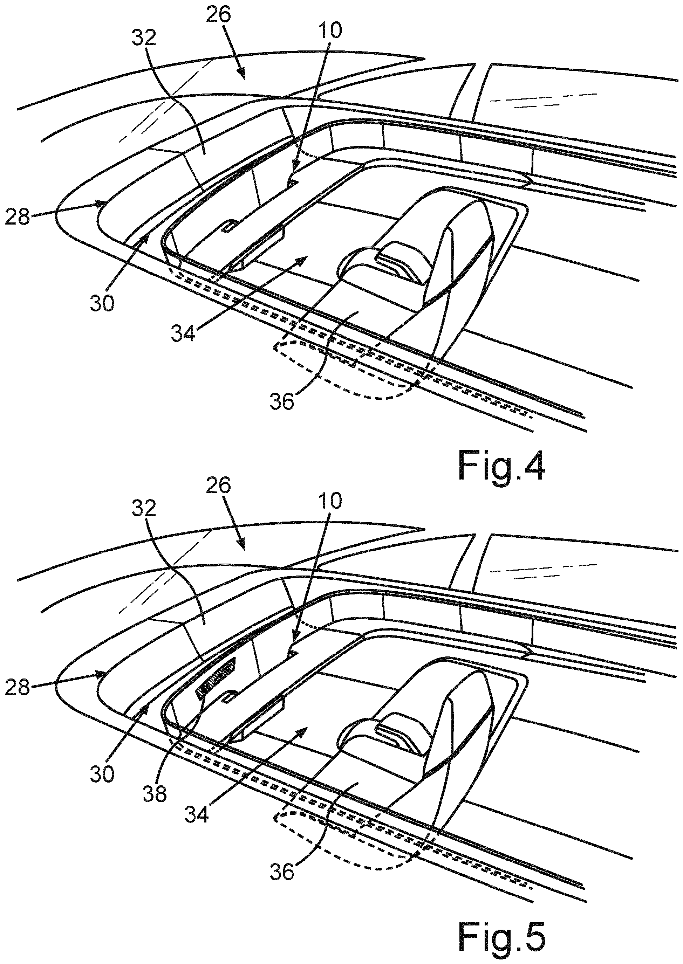

Die drei in den Figuren 1, 2 und 3 beschriebenen Ausführungsformen der Anzeigescheiben 10 stellen somit jeweils eine Anzeigescheibe 10 für eine Anzeigevorrichtung bereit, welche zumindest ein graphisches Anzeigeobjekt 12 auf einem transparenten Hintergrund abbilden kann. In den folgenden Figuren 4, 5, 6 und 7 wird schematisch eine Anordnungsmöglichkeit der Anzeigescheibe 10 in einem Kraftfahrzeug 26 dargestellt. Dabei zeigen die Figuren eine Perspektivansicht eines lediglich teilweise dargestellten Innenraums des Kraftfahrzeugs 26. Eine Scheibenwurzel 28 des Kraftfahrzeugs 26 weist eine wannenförmige Aussparung 30 auf. Mit anderen Worten weist der Bereich unmittelbar unterhalb der Windschutzscheibe des Kraftfahrzeugs 26 eine Vertiefung auf. Die wannenförmige Aussparung 30 weist zumindest eine Seitenwand 32 auf, welche hier dargestellt sich entlang einer Breite der Windschutzscheibe erstreckt. Die wannenförmige Aussparung 30 kann zudem zwei weitere Seitenwände 32 in einem jeweiligen Fahrzeugtür-Bereich aufweisen. Hier dargestellt ist die wannenförmige Aussparung 30 mit Holz verkleidet.

Die wannenförmige Aussparung 30 ist zu einem Fahrerraum 34 hin geöffnet. Die Anzeigescheibe 10 der Anzeigevorrichtung ist innerhalb der wannenförmigen Aussparung 30 angeordnet, wobei eine Gesamtfläche der Anzeigescheibe 10 parallel zu der Seitenwand 32 und parallel zu der zu dem Fahrerraum offenen Seite ist. Somit kann von einem Fahrersitz 36 aus gesehen in der wannenförmigen Aussparung 30 die Anzeigescheibe 10 unverdeckt wahrgenommen werden. Die Anzeigescheibe 10 ist in einem vorbestimmten Abstand zu der zumindest einen Seitenwand 32 angeordnet. Weiterhin ist die Anzeigescheibe 10 in einem vorbestimmten Abstand zu der offenen Seite angeordnet. Die jeweiligen vorbestimmten Abstände können mindestens 10 cm betragen. Ein gesamtes Armaturenbrett des Kraftfahrzeugs 26 kann somit durch die wannenförmige Aussparung 30 und die Anzeigescheibe 10 gebildet werden.

In Fig. 4 ist die Gesamtfläche der Anzeigescheibe 10 transparent, alle vorbestimmten Teilbereiche 22 der Anzeigescheibe 10 sind somit in einem transparenten Zustand geschaltet. Die gesamte Umgebung 14 der Anzeigescheibe 10 ist in der Anzeigescheibe 10 erkennbar. Diese gesamte transparente Schaltung der Anzeigescheibe 10 kann beispielsweise in einem Ruhemodus des Kraftfahrzeugs 26 durch die Steuereinrichtung eingestellt werden, beispielsweise wenn das Kraftfahrzeug 26 geparkt oder abgestellt ist.

Je nach Fahrbetriebsmodus oder ausgeführter Funktion eines Infotainmentsystems des Kraftfahrzeugs 26 können unterschiedliche vorbestimmte Teilbereiche 22 der Anzeigescheibe 10 durch die Steuereinrichtung in einen opaken Zustand geschaltet werden, sodass in diesen Teilbereichen 22 verschiedene graphische Anzeigeobjekte 12 dargestellt werden können. In Fig. 5 wird beispielsweise das Kraftfahrzeug 26 in einem manuellen Fahrmodus betrieben. Hierbei ist es wichtig, dass einem Fahrer ein Kombiinstrument 38 bereitgestellt wird. Weitere Darstellungsinhalte sind für den Fahrer weniger bedeutend, da dieser sein Hauptmerk auf ein Verkehrsgeschehen in der Umgebung des Kraftfahrzeugs 26 richten sollte. In diesem manuellen Fahrmodus ist ein verhältnismäßig kleiner Bereich der Anzeigescheibe 10 im Blickfeld des Fahrers in einem opaken Zustand geschaltet, auf welchem graphische Anzeigeobjekte 12 des Kombiinstruments 38 dargestellt werden. Die restliche Anzeigescheibe 10 ist in einem transparenten Zustand geschaltet.

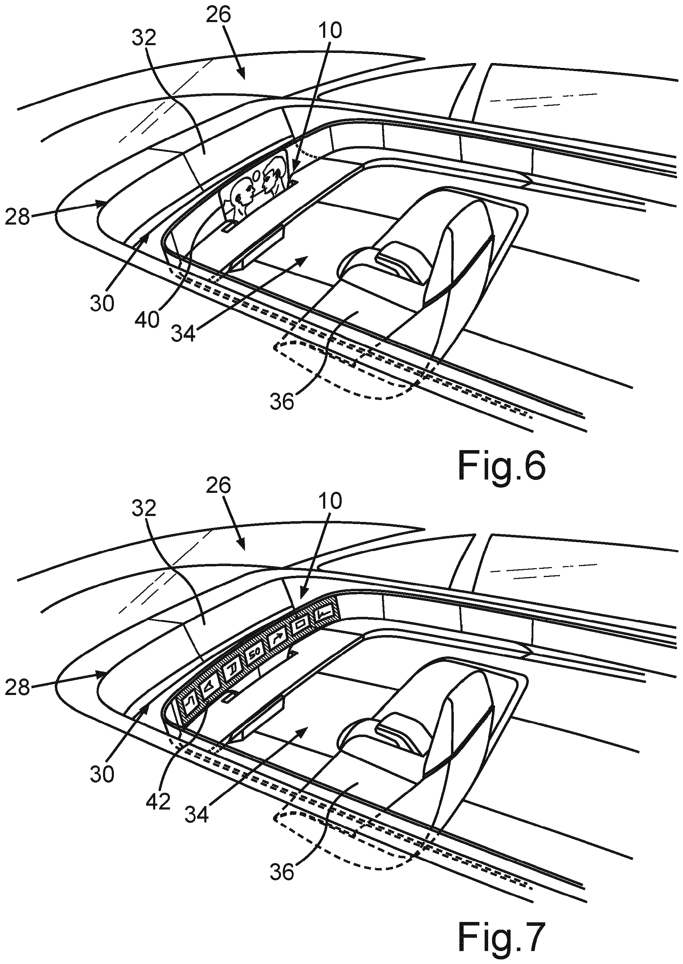

In Fig. 6 wird das Kraftfahrzeug 26 in einem autonomen Fahrmodus betrieben. Die Steuereinrichtung erkennt, dass durch den Benutzer beispielsweise eine Darstellung eines Films 40 auf der Anzeigescheibe 10 ausgewählt wurde. Die Steuereinrichtung ermittelt, welche vorbestimmten Teilbereiche 22 der Anzeigescheibe 10 zumindest teilweise den Film 40 darstellen und schaltet lediglich diese Teilbereiche 22 in den opaken Zustand. Die restlichen Teilbereiche 22 werden in den transparenten Zustand geschaltet. Ein Benutzer kann auch beispielsweise eine Darstellungsgröße und/oder einen Darstellungsort des Films 40 einstellen. Die Steuereinrichtung passt die Auswahl der vorbestimmten Teilbereiche 22, die im opaken Zustand geschaltet sind, an die Darstellungsgröße und/oder den Darstellungsort des Films 40 an.

In Fig. 7 wird das Kraftfahrzeug 26 ebenfalls in dem autonomen Fahrmodus betrieben. Ein Benutzer hat beispielsweise ausgewählt, dass ein Webseiteninhalt 42 auf der Anzeigescheibe 10 dargestellt werden soll. Um diesen Webseiteninhalt 42 möglichst übersichtlich anzuzeigen, schaltet die Steuereinrichtung die Gesamtfläche der Anzeigescheibe 10 opak, um auf der gesamten Fläche den Webseiteninhalt 42 darzustellen. In dem autonomen Fahrmodus kann der Fahrer seine ganze Aufmerksamkeit dem Darstellungsinhalt der Anzeigescheibe 10 widmen, da es weniger wichtig ist, das Verkehrsgeschehen dauerhaft zu beobachten.

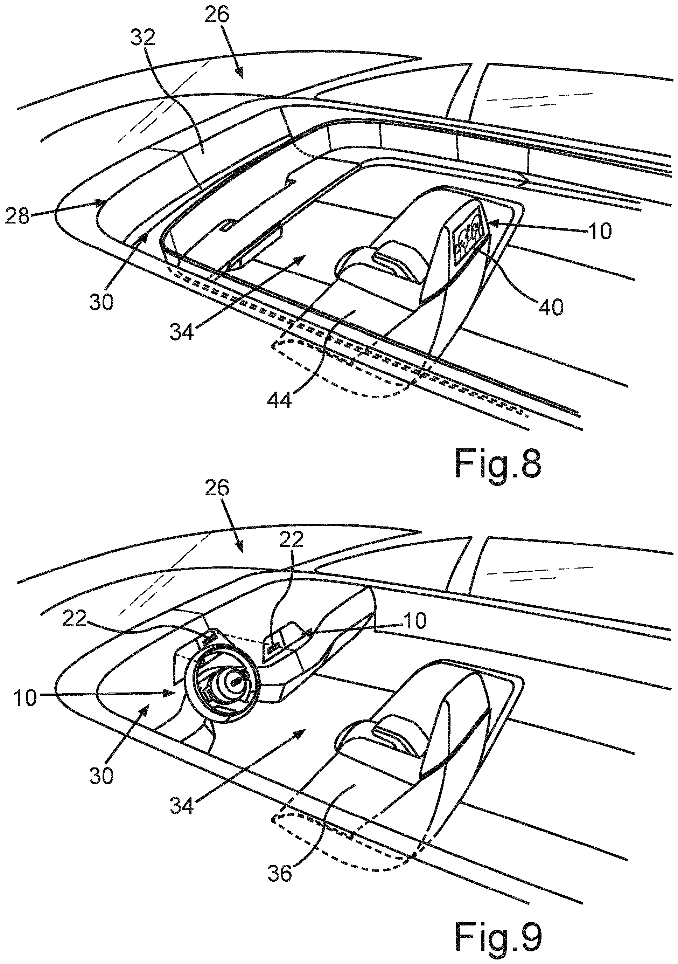

In Fig. 8 und in Fig. 9 sind jeweils weitere alternative Anordnungsmöglichkeiten der Anzeigescheibe 10 im Kraftfahrzeug 26 dargestellt. Dabei zeigt Fig. 8 aus einer Perspektivansicht einen Fahrzeugsitz 44 mit einem Nackenstützbereich, an welchen eine weitere Anzeigescheibe 10 der Anzeigevorrichtung angeordnet ist. Beispielsweise ist die Anzeigescheibe 10 in dem Nackenstützbereich integriert. Hier dargestellt wird auf der Anzeigescheibe 10 ein Film 40 angezeigt. Bei dem Fahrzeugsitz 44 kann es sich um einen Fahrersitz 36 oder einem Beifahrersitz des Kraftfahrzeugs 26 handeln.

Die Fig. 9 zeigt in einer Perspektivansicht ein Armaturenbrett des Kraftfahrzeugs aus der Perspektive des Innenraums des Kraftfahrzeugs 26. Dabei ist eine Anzeigescheibe 10 in einem Bereich hinter dem Lenkrad des Kraftfahrzeugs 26 angeordnet und eine weitere Anzeigescheibe 10 in einem Bereich einer Mittelkonsole angeordnet. Die jeweiligen Anzeigescheiben 10 können unterschiedliche Darstellungsinhalte anzeigen. Hier dargestellt ist auf jeder Anzeigescheibe 10 ein vorbestimmter Teilbereich 22 in einen opaken Zustand geschaltet.

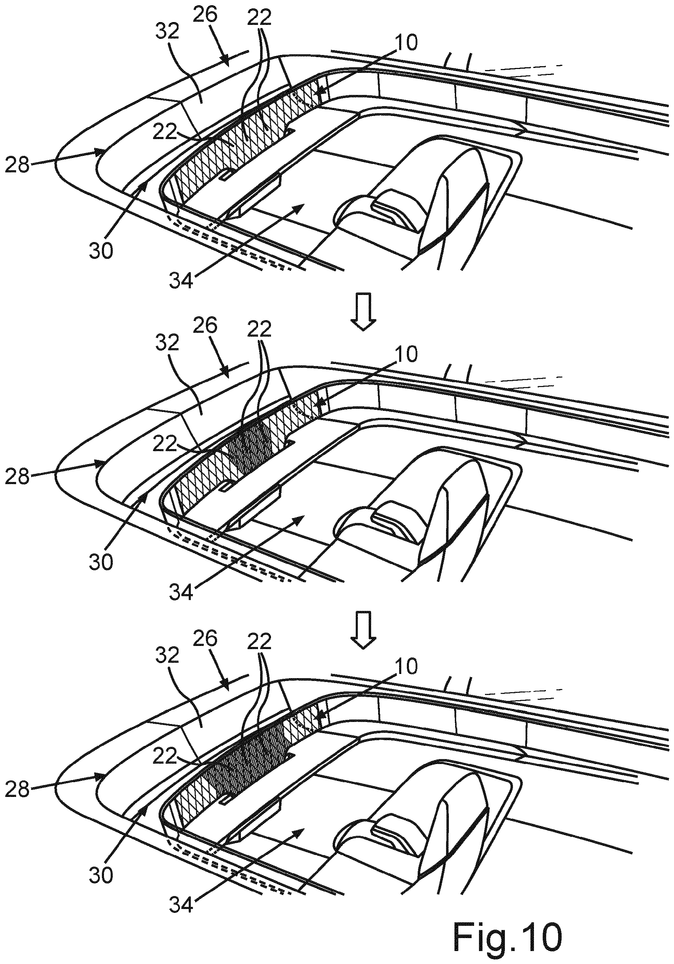

In Fig. 10 sind drei Anzeigescheiben 10 aus einer Perspektivansicht wie in Fig. 4 schematisch dargestellt. Dabei sind in den Anzeigescheiben 10 der Fig. 10 alle vorbestimmten Teilbereiche 22 zu erkennen, in welche die Anzeigescheibe 10 unterteilt ist. Jeder der vorbestimmten Teilbereiche 22 ist einzeln zwischen einem transparenten Zustand und einem opaken Zustand durch die Steuervorrichtung schaltbar. Um beispielsweise auf einer komplett transparent geschalteten Anzeigescheibe 10 graduell oder schrittweise zumindest einen Anteil der Gesamtfläche der Anzeigescheibe 10 opak zu schalten, können zeitlich nacheinander die einzelnen vorbestimmten Teilbereiche 22 von dem transparenten Zustand in den opaken Zustand geschaltet werden. Hierzu zeigt die Fig. 10 drei Momentaufnahmen der Anzeigescheibe 10 bei dem graduellen Übergang von einem komplett transparenten Zustand der Anzeigescheibe 10, wie in der obersten Figur der Fig. 10 dargestellt, zu einer größtenteils in einem opaken Zustand geschalteten Anzeigescheibe 10, wie in der untersten Figur der Fig. 10 dargestellt. Die mittlere Figur der Fig. 10 zeigt dabei eine zwischen den beiden Zuständen intermediäre Übergangsphase an, bei welcher lediglich ein Anteil der vorbestimmten Teilbereiche 22 bereits opak geschaltet wurde.

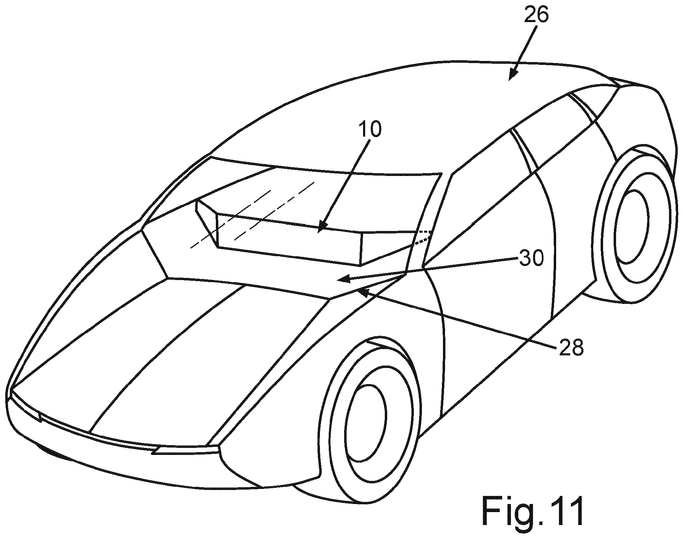

In der Fig. 11 ist aus einer vorderen Perspektivansicht schematisch das Kraftfahrzeug 26 dargestellt, wobei in dieser Ausführungsform die Anzeigescheibe 10, wie in den Figuren 4 bis 7 dargestellt, innerhalb einer wannenförmigen Aussparung 30 im Scheibenwurzelbereich 28 des Kraftfahrzeugs 26 angeordnet ist. Die wannenförmige Aussparung 30 unterscheidet sich jedoch zu den Figuren 4 bis 7 darin, dass nicht nur eine Seite der wannenförmigen Aussparung 30 in Richtung des Fahrersitzes 36 geöffnet ist, sondern auch eine Seite in Richtung der Windschutzscheibe des Kraftfahrzeugs 26. Die wannenförmige Aussparung 30 weist somit lediglich zwei Seitenwände 32 auf, welche sich jeweils an einer Fahrzeugtürseite des Kraftfahrzeugs 26 befinden. Die Windschutzscheibe des Kraftfahrzeugs 26 weist die Besonderheit auf, dass deren Unterkante im Vergleich zu herkömmlichen Windschutzscheiben nach unten gezogen ist, um eine Sicht auf die vorausgehende Umgebung des Kraftfahrzeugs 26 freizugeben, wenn ein Kraftfahrzeuginsasse durch den wenigstens einen transparent geschalteten vorbestimmten Teilbereich der Anzeigescheibe 10 hindurchschaut. Mit anderen Worten passt sich eine Form der Windschutzscheibe der wannenförmigen Aussparung 30 an. Eine Tiefe der Windschutzscheibe kann dann einer Tiefe der wannenförmigen Aussparung 30 entsprechen.

Insgesamt zeigen die Beispiele, wie durch die Erfindung eine Anzeigevorrichtung für ein Kraftfahrzeug bereitgestellt wird, welche ermöglicht, eine tatsächliche und optisch wahrgenommene Raumeinschränkung eines Innenraums des Kraftfahrzeugs zu verringern und zugleich eine übersichtliche Darstellung von Anzeigeinhalten bietet.

## Patentansprüche

1. Kraftfahrzeug (26) aufweisend zumindest eine Anzeigevorrichtung, welche eine Anzeigescheibe (10) zum Anzeigen von wenigstens einem graphischen Anzeigeobjekt (12) und eine Steuereinrichtung umfasst, wobei die Anzeigescheibe (10) frei in einem Raum steht, und wobei die Anzeigescheibe (10) eine Vielzahl von vorbestimmten Teilbereichen (22) umfasst, welche jeweils einen einstellbaren Grad einer Lichtdurchlässigkeit aufweisen, wobei in Abhängigkeit von dem Grad der Lichtdurchlässigkeit eine Umgebung (14) der Anzeigescheibe (10) in der Anzeigescheibe (10) sichtbar ist, und wobei die Steuereinrichtung dazu eingerichtet ist, für jeden der Vielzahl von vorbestimmten Teilbereichen (22) der Anzeigescheibe (10) eine jeweilige Lichtdurchlässigkeit auf einen vorbestimmten Grad individuell einzustellen, wobei die zumindest eine Anzeigevorrichtung im Bereich eines Armaturenbretts und/oder einer Mittelkonsole und/oder einer Scheibenwurzel und/oder einer Fahrzeugtür und/oder eines Fahrzeugsitzes (44) des Kraftfahrzeugs angeordnet ist,
**dadurch gekennzeichnet, dass** das Kraftfahrzeug (26) in einem Scheibenwurzelbereich (28) einer Windschutzscheibe eine wannenförmige Aussparung (30) mit zumindest einer Seitenwand (32) aufweist, wobei die wannenförmige Aussparung (30) in Richtung eines Fahrerraums (34) geöffnet ist, und wobei die Anzeigescheibe (10) der Anzeigevorrichtung innerhalb der wannenförm igen Aussparung (30) in einem vorbestimmten Abstand zu der zumindest einen Seitenwand (32) derart angeordnet ist, dass die zumindest eine Seitenwand (32) der wannenförmigen Aussparung (30) zumindest ausschnittsweise in der Anzeigescheibe (10) sichtbar ist, wobei die wannenförmige Aussparung (30) in Richtung der Windschutzscheibe geöffnet ist, sodass in der innerhalb der wannenförmigen Aussparung (30) angeordneten Anzeigescheibe (10) die Windschutzscheibe sichtbar ist, und/oder
zwischen der zumindest einen Seitenwand (32) der wannenförmigen Aussparung (30) und der Anzeigescheibe (10) der Anzeigevorrichtung eine Ablage und/oder eine weitere Anzeigescheibe (10) angeordnet ist, und/oder
die Anzeigescheibe (10) in zumindest einer Raumrichtung beweglich gelagert ist und wobei die Steuereinrichtung der Anzeigevorrichtung dazu ausgelegt ist, in Abhängigkeit von einem Bedienvorgang und/oder von einer Kraftfahrzeugfunktion und/oder von einem Fahrbetriebsmodus des Kraftfahrzeugs (26) eine Bewegung der Anzeigescheibe (10) in der zumindest einen Raumrichtung anzusteuern.

2. Kraftfahrzeug (26) nach Anspruch 1, wobei die Steuereinrichtung dazu eingerichtet ist, zu ermitteln, welche vorbestimmten Teilbereiche (22) der Anzeigescheibe (10) zumindest teilweise das wenigstens eine graphische Anzeigeobjekt (12) anzeigen und den vorbestimmten Grad der Lichtdurchlässigkeit dieser vorbestimmten Teilbereiche (22) auf einen geringeren Grad der Lichtdurchlässigkeit als ohne das wenigstens eine angezeigte graphische Anzeigeobjekt (12) einzustellen.

3. Kraftfahrzeug (26) nach Anspruch 2, wobei die Steuereinrichtung dazu eingerichtet ist, den vorbestimmten Grad der Lichtdurchlässigkeit des zumindest einen ermittelten Teilbereichs (22) dann zu verringern, wenn das wenigstens eine graphische Anzeigeobjekt (12) ein Bedeutsamkeitskriterium erfüllt.

4. Kraftfahrzeug (26) nach einem der vorhergehenden Ansprüche, wobei die Steuereinrichtung dazu eingerichtet ist, zumindest einen vorbestimmten Teilbereich (22) der Vielzahl von vorbestimmten Teilbereichen (22) der Anzeigescheibe (10) nach einem vorbestimmten Auswahlkriterium auszuwählen und den vorbestimmten Grad der Lichtdurchlässigkeit des zumindest einen ausgewählten Teilbereichs (22) zu reduzieren, wobei die Steuereinrichtung weiterhin dazu eingerichtet ist, eine Darstellungsgröße und/oder einen Darstellungsort des wenigstens einen graphischen Anzeigeobjekts (12) derart festzulegen, dass eine durch das wenigstens eine angezeigte graphische Anzeigeobjekt (12) eingenommene Teilfläche auf der Anzeigescheibe (10) vollständig durch den zumindest einen ausgewählten vorbestimmten Teilbereich (22) umfasst ist.

5. Kraftfahrzeug (26) nach einem der vorhergehenden Ansprüche 2 bis 4, wobei die Anzeigevorrichtung eine Blickerfassungseinrichtung zum Erfassen einer Blickrichtung eines Benutzers auf der Anzeigescheibe (10) aufweist, wobei die Steuereinrichtung dazu eingerichtet ist, einen Darstellungsort des wenigstens einen graphischen Anzeigeobjekts (12) und/oder den zumindest einen vorbestimmten Teilbereich (22) in Abhängigkeit von der erfassten Blickrichtung auszuwählen.

6. Kraftfahrzeug (26) nach einem der vorhergehenden Ansprüche, wobei die Anzeigescheibe (10) der Anzeigevorrichtung zumindest zwei parallel zueinander angeordnete Schichten (16, 18) aufweist, wobei
- zumindest eine erste Schicht (16) elektrisch leitfähig ist und dazu ausgelegt ist, das wenigstens eine graphische Anzeigeobjekt (12) anzuzeigen, wobei der vorbestimmte Grad der Lichtdurchlässigkeit eines jeweiligen vorbestimmten Teilbereichs (22) der Anzeigescheibe (10) durch ein Anlegen einer elektrischen Spannung in dem jeweiligen vorbestimmten Teilbereich (22) der ersten Schicht (16) variierbar ist; und wobei
- zumindest eine zweite Schicht (18) transparent ist und dazu ausgelegt ist, zumindest in denjenigen vorbestimmten Teilbereichen (22) der Anzeigescheibe (10) Licht zu emittieren, in welchen das wenigstens eine graphische Anzeigeobjekt (12) in der ersten Schicht (16) zumindest teilweise angezeigt wird; sodass
insgesamt auf der Anzeigescheibe (10) das jeweilige wenigstens eine graphische Anzeigeobjekt (12) als ein lichtabstrahlendes Anzeigeobjekt (12) angezeigt wird.

7. Kraftfahrzeug (26) nach einem der vorhergehenden Ansprüche 1 bis 5, wobei die Anzeigescheibe (10) der Anzeigevorrichtung zumindest zwei parallel zueinander angeordnete Schichten (16, 18) aufweist, wobei
- zumindest eine erste Schicht (16) transparent ist und dazu ausgelegt ist, das wenigstens eine graphische Anzeigeobjekt (12) als ein transparentes Leuchtbild (20) anzuzeigen; und wobei
- zumindest eine zweite Schicht (18) elektrisch leitfähig ist, wobei der vorbestimmte Grad der Lichtdurchlässigkeit zumindest in denjenigen vorbestimmten Teilbereichen (22) der Anzeigescheibe (10), in welchen das wenigstens eine transparente Leuchtbild in der ersten Schicht (16) zumindest teilweise angezeigt wird, durch ein Anlegen einer elektrischen Spannung in dem jeweiligen vorbestimmten Teilbereich (22) der zweiten Schicht (18) variierbar ist; sodass
insgesamt auf der Anzeigescheibe (10) das jeweilige wenigstens eine graphische Anzeigeobjekt (12) als ein lichtabstrahlendes Anzeigeobjekt (12) angezeigt wird.

8. Kraftfahrzeug (26) nach einem der vorhergehenden Ansprüche, wobei die Steuereinrichtung bei Einstellen der Lichtdurchlässigkeit zumindest eines vorbestimmten Teilbereichs (22) der Anzeigescheibe (10) auf einen vorbestimmten Grad dazu eingerichtet ist, den Grad der Lichtdurchlässigkeit des zumindest eines vorbestimmten Teilbereichs (22) der Anzeigescheibe (10) von einem anfänglichen Grad zu dem einzustellenden vorbestimmten Grad der Lichtdurchlässigkeit graduell variieren zu lassen.

9. Kraftfahrzeug (26) nach einem der vorhergehenden Ansprüche, wobei die Steuereinrichtung der zumindest einen Anzeigevorrichtung dazu eingerichtet ist, einen jeweiligen Grad der Lichtdurchlässigkeit der Vielzahl von vorbestimmten Teilbereichen (22) der Anzeigescheibe (10) der Anzeigevorrichtung in Abhängigkeit von einem Bedienvorgang und/oder von einer Kraftfahrzeugfunktion und/oder von einem Fahrbetriebsmodus des Kraftfahrzeugs (26) einzustellen.

10. Kraftfahrzeug (26) nach einem der vorhergehenden Ansprüche, wobei sich die wannenförmige Aussparung (30) und/oder eine Längsrichtung der Anzeigescheibe (10) zumindest teilweise oder vollständig über eine Gesamtlänge der Scheibenwurzel (28) erstreckt.

## Claims

1. Motor vehicle (26) having at least one display device which comprises a display panel (10) for displaying at least one graphic display object (12) and a control apparatus, wherein the display panel (10) stands freely in a space, and wherein the display panel (10) comprises a multiplicity of predetermined part-regions (22) which have in each case an adjustable degree of a light permeability, wherein depending on the degree of the light permeability an environment (14) of the display panel (10) is visible in the display panel (10), and wherein the control apparatus is configured to set individually a respective light permeability to a predetermined degree for each of the multiplicity of predetermined part-regions (22), wherein the at least one display device is arranged in the region of an instrument panel and/or a middle console and/or a pane root and/or a vehicle door and/or a vehicle seat (44) of the motor vehicle,
**characterised in that**
in a pane root region (28) of a windscreen, the motor vehicle (26) has a trough-shaped cutout (30) having at least one side wall (32), wherein the trough-shaped cutout (30) is opened in the direction of a driver's cockpit (34) and wherein the display pane (10) of the display device is arranged within the trough-shaped cutout (30) at a predetermined distance from the at least one side wall (32) such that the at least one side wall (32) of the trough-shaped cutout (30) is visible at least in portions in the display panel (10), wherein the trough-shaped cutout (30) is opened in the direction of the windscreen, such that the windscreen is visible in the display panel (10) arranged within the trough-shaped cutout (30), and/or between the at least one side wall (32) of the trough-shaped cutout (30) and the display panel (10) of the display device is arranged a storage tray and/or a further display panel (10), and/or
the display panel (10) is mounted so as to be movable with at least one spatial direction and wherein the control apparatus of the display device is configured to trigger a movement of the display panel (10) in the at least one spatial direction depending on an operating action and/or a motor vehicle function and/or a driving operating mode of the motor vehicle (26).

2. Motor vehicle (26) according to claim 1, wherein the control apparatus is configured to determine which predetermined part-regions (22) of the display panel (10) display at least partially the at least one graphic display object (12) and to set the predetermined degree of light permeability of these predetermined part-regions (22) to a lower degree of light permeability than without the at least one displayed graphic display object (12).

3. Motor vehicle (26) according to claim 2, wherein the control apparatus is configured to reduce the predetermined degree of light permeability of the at least one determined part-region (22) when the at least one graphic display object (12) fulfils a significance criterion.

4. Motor vehicle (26) according to any of the preceding claims, wherein the control apparatus is configured to select at least one predetermined part-region (22) from the multiplicity of predetermined part-regions (22) of the display panel (10) according to a predetermined selection criterion and to reduce the predetermined degree of light permeability of the at least one selected part-region (22), wherein the control apparatus is furthermore configured to set a representation size and/or a representation location of the at least one graphic display object (12) such that a partial surface on the display panel (10) occupied by the at least one displayed graphic display object (12) is enclosed completely by the at least one selective predetermined part-region (22).

5. Motor vehicle (26) according to any of the preceding claims 2 to 4, wherein the display device includes a gaze capturing device for capturing a gaze direction of the user onto the display panel (10), wherein the control apparatus is configured to select a representation of the at least one graphic display object (12) and/or the at least one predetermined part-region (22) depending on the detected gaze direction.

6. Motor vehicle (26) according to any of the preceding claims, wherein the display panel (10) of the display device has at least two layers (16, 18) are arranged in parallel to one another, wherein
- at least one first layer (16) is electrically conductive and is configured to display the at least one graphic display object (12), wherein the predetermined degree of light permeability of a respective predetermined part-region (22) of the display panel (10) is able to be varied by means of an application of an electrical voltage in the respective predetermined part-region (22) of the first layer (16); and wherein
- at least one second layer (18) is transparent and is configured to emit light at least in the pre-determined part-regions (22) of the display panel (10) in which the at least one graphic display object (12) is displayed at least partially in the first layer (16); such that
all in all the respective at least one graphic display object (12) is displayed on the display panel (10) as a light-emitting display object (12).

7. Motor vehicle (26) according to any of the preceding claims 1 to 5, wherein the display panel (10) of the display device has at least two layers (16, 18) arranged in parallel to one another, wherein
- at least one first layer (16) is transparent and is configured to display the at least one graphic display object (12) as a transparent luminous image (20); and wherein
- at least one second layer (18) is electrically conductive, wherein the predetermined degree of light permeability at least in the predetermined part-regions (22) of the display panel (10) in which the at least one transparent luminous image is at least partially displayed in the first layer (16) is variable by means of applying an electrical voltage in the respective predetermined part-region (22) of the second layer (18); such that
all in all the respective at least one graphic display object (12) is displayed on the display panel (10) as a light-emitting display object (12).

8. Motor vehicle (26) according to any of the preceding claims, wherein when setting the light permeability of at least one predetermined part-region (22) of the display panel (10) to a predetermined degree, the control apparatus is configured to permit the degree of light permeability of the at least one predetermined part-region (22) of the display panel (10) to vary gradually from an initial degree to the predetermined degree of light permeability which is to be set.

9. Motor vehicle (26) according to any of the preceding claims, wherein the control apparatus of the at least one display device is configured to set a respective degree of light permeability of the plurality of predetermined part-regions (22) of the display panel (10) of the display device depending on an operating action and/or a motor vehicle function and/or a driving operating mode of the motor vehicle (26).

10. Motor vehicle (26) according to any of the preceding claims, wherein the trough-shaped cutout (30) and/or a longitudinal direction of the display panel (10) extend at least partially or completely across the entire length of the pane root (28).

## Revendications

1. Véhicule automobile (26) présentant au moins un dispositif d'affichage, lequel comprend une vitre d'affichage (10) pour l'affichage d'au moins un objet d'affichage graphique (12) et un appareil de commande, dans lequel la vitre d'affichage (10) est placée librement dans un espace, et dans lequel la vitre d'affichage (10) comprend une pluralité de zones partielles prédéterminées (22), lesquelles présentent respectivement un degré réglable d'une translucidité, dans lequel un environnement (14) de la vitre d'affichage (10) est visible dans la vitre d'affichage (10) en fonction du degré de la translucidité, et dans lequel l'appareil de commande est configuré pour régler individuellement à un degré prédéterminé une translucidité respective pour chacune de la pluralité de zones partielles prédéterminées (22) de la vitre d'affichage (10), dans lequel l'au moins un dispositif d'affichage est disposé au niveau d'un tableau de bord et/ou d'une console centrale et/ou d'une base de vitre et/ou d'une portière de véhicule et/ou d'un siège de véhicule (44) du véhicule automobile,
**caractérisé en ce**
**que** le véhicule automobile (26) présente dans une zone de base de vitre (28) d'un pare-brise un évidement en forme de cuvette (30) avec au moins une paroi latérale (32), dans lequel l'évidement en forme de cuvette (30) est ouvert en direction d'un espace de conducteur (34), et dans lequel la vitre d'affichage (10) du dispositif d'affichage est disposée à l'intérieur de l'évidement en forme de cuvette (30) à une distance prédéterminée de l'au moins une paroi latérale (32) de sorte que l'au moins une paroi latérale (32) de l'évidement en forme de cuvette (30) est visible au moins par sections dans la vitre d'affichage (10), dans lequel l'évidement en forme de cuvette (30) est ouvert en direction du pare-brise, de sorte que le pare-brise est visible dans la vitre d'affichage (10) disposée à l'intérieur de l'évidement en forme de cuvette (30), et/ou un rangement et/ou une autre vitre d'affichage (10) est disposé entre l'au moins une paroi latérale (32) de l'évidement en forme de cuvette (30) et la vitre d'affichage (10) du dispositif d'affichage, et/ou
la vitre d'affichage (10) est montée de manière mobile dans au moins une direction spatiale et dans lequel l'appareil de commande du dispositif d'affichage est conçu pour commander un mouvement de la vitre d'affichage (10) dans l'au moins une direction spatiale en fonction d'une opération et/ou d'une fonction de véhicule automobile et/ou d'un mode de conduite du véhicule automobile (26).

2. Véhicule automobile (26) selon la revendication 1, dans lequel l'appareil de commande est configuré pour déterminer quelles zones partielles prédéterminées (22) de la vitre d'affichage (10) affichent au moins partiellement l'au moins un objet d'affichage graphique (12) et pour régler le degré prédéterminé de la translucidité de ces zones partielles prédéterminées (22) à un degré plus faible de la translucidité que sans l'au moins un objet d'affichage graphique (12) affiché.

3. Véhicule automobile (26) selon la revendication 2, dans lequel l'appareil de commande est configuré pour réduire le degré prédéterminé de la translucidité de l'au moins une zone partielle prédéterminée (22) lorsque l'au moins un objet d'affichage graphique (12) remplit un critère d'importance.

4. Véhicule automobile (26) selon l'une quelconque des revendications précédentes, dans lequel l'appareil de commande est configuré pour sélectionner au moins une zone partielle prédéterminée (22) de la pluralité de zones partielles prédéterminées (22) de la vitre d'affichage (10) selon un critère de sélection prédéterminé et pour réduire le degré prédéterminé de la translucidité de l'au moins une zone partielle sélectionnée (22), dans lequel l'appareil de commande est en outre configuré pour déterminer une taille de représentation et/ou un emplacement de représentation de l'au moins un objet d'affichage graphique (12) de sorte qu'une surface partielle occupée par l'au moins un objet d'affichage graphique affiché (12) sur la vitre d'affichage (10) est entièrement entourée par l'au moins une zone partielle prédéterminée sélectionnée (22).

5. Véhicule automobile (26) selon l'une quelconque des revendications précédentes 2 à 4, dans lequel le dispositif d'affichage présente un dispositif de détection du regard pour détecter une direction du regard d'un utilisateur sur la vitre d'affichage (10), dans lequel l'appareil de commande est configuré pour sélectionner un emplacement de représentation de l'au moins un objet d'affichage graphique (12) et/ou l'au moins une zone partielle prédéterminée (22) en fonction de la direction du regard détectée.

6. Véhicule automobile (26) selon l'une quelconque des revendications précédentes, dans lequel la vitre d'affichage (10) du dispositif d'affichage présente au moins deux couches (16, 18) disposées parallèlement l'une à l'autre, dans lequel
- au moins une première couche (16) est électroconductrice et est conçue pour afficher ledit au moins un objet d'affichage graphique (12), dans lequel le degré prédéterminé de la translucidité d'une zone partielle prédéterminée respective (22) de la vitre d'affichage (10) peut être modifié par une application d'une tension électrique dans la zone partielle prédéterminée respective (22) de la première couche (16) ; et dans lequel
- au moins une seconde couche (18) est transparente et est conçue pour émettre de la lumière au moins dans les zones partielles prédéterminées (22) de la vitre d'affichage (10) dans lesquelles l'au moins un objet d'affichage graphique (12) est au moins partiellement affiché dans la première couche (16) ; de sorte
qu'au total, l'au moins un objet d'affichage graphique respectif (12) est affiché en tant qu'objet d'affichage émettant de la lumière (12) sur la vitre d'affichage (10).

7. Véhicule automobile (26) selon l'une quelconque des revendications précédentes 1 à 5, dans lequel la vitre d'affichage (10) du dispositif d'affichage présente au moins deux couches (16, 18) disposées parallèlement l'une à l'autre, dans lequel
- au moins une première couche (16) est transparente et conçue pour afficher l'au moins un objet graphique d'affichage (12) en tant qu'image lumineuse transparente (20) ; et dans lequel
- au moins une seconde couche (18) est électroconductrice, dans lequel le degré prédéterminé de la translucidité peut être modifié, au moins dans les zones partielles prédéterminées (22) de la vitre d'affichage (10) dans lesquelles l'au moins une image lumineuse transparente est au moins partiellement affichée dans la première couche (16), par une application d'une tension électrique dans la zone partielle prédéterminée respective (22) de la seconde couche (18) ; de sorte
qu'au total, l'au moins un objet d'affichage graphique respectif (12) est affiché en tant qu'objet d'affichage émettant de la lumière (12) sur la vitre d'affichage (10).

8. Véhicule automobile (26) selon l'une quelconque des revendications précédentes, dans lequel, lors du réglage de la translucidité d'au moins une zone partielle prédéterminée (22) de la vitre d'affichage (10) à un degré prédéterminé, l'appareil de commande est configuré pour faire varier progressivement le degré de la translucidité de l'au moins une zone partielle prédéterminée (22) de la vitre d'affichage (10) d'un degré initial au degré prédéterminé de la translucidité à régler.

9. Véhicule automobile (26) selon l'une quelconque des revendications précédentes, dans lequel l'appareil de commande de l'au moins un dispositif d'affichage est configuré pour régler un degré respectif de la translucidité de la pluralité de zones partielles prédéterminées (22) de la vitre d'affichage (10) du dispositif d'affichage en fonction d'une opération et/ou d'une fonction de véhicule automobile et/ou d'un mode de conduite du véhicule automobile (26).

10. Véhicule automobile (26) selon l'une quelconque des revendications précédentes, dans lequel l'évidement en forme de cuvette (30) et/ou une direction longitudinale de la vitre d'affichage (10) s'étend au moins partiellement ou entièrement sur une longueur totale de la zone de base de vitre (28).
